# EUROPÄISCHE PATENTANMELDUNG

(11) **EP 3 734 057 A1**
(43) Veröffentlichungstag der Anmeldung: **04.11.2020**
(21) Anmeldenummer: 20165588.3
(22) Anmeldetag: 25.03.2020
(51) Int. Cl.: F02M 35/10, F02M 35/104, F02M 35/112

(54) **LADELUFTLEITUNG EINER BRENNKRAFTMASCHINE UND BRENNKRAFTMASCHINE**

(30) Priorität: 03.05.2019 DE 102019111421
(71) Anmelder: MAN Energy Solutions SE, 86153 Augsburg (DE)
(72) Erfinder: EGER, Thomas, 86157 Augsburg (DE); KNAUER, Bernd, 86692 Münster (DE); KÖRTING, Thomas, 86508 Rehling (DE)

(57) **Zusammenfassung**

Ladeluftleitung (1) einer Brennkraftmaschine zur Versorgung mehrerer in einer Reihe angeordneter Zylinder einer Zylinderbank der Brennkraftmaschine mit Ladeluft, mit mehreren Ladeluftleitungsabschnitten (6) der Ladeluftleitung (1), wobei ausgehend von jedem Ladeluftleitungsabschnitt (6) eine Abzweigung (7) zu einem Zylinder führt, die mit einem Zylinderkopf des jeweiligen Zylinders verschraubbar ist, mit einem stromaufwärtigen Ende (9) der Ladeluftleitung (1), über welches der Ladeluftleitung mit Ladeluft zuführbar ist, und mit einem stromabwärtigen Ende (10) der Ladeluftleitung (1), welches durch einen Enddeckel (11) verschlossen ist. Die Ladeluftleitung (1) weist am stromaufwärtigen Ende (9) einen größeren Strömungsquerschnitt auf als am stromabwärtigen Ende (10). (Fig. 2)

## Beschreibung

Die Erfindung betrifft eine Ladeluftleitung einer Brennkraftmaschine. Weiterhin betrifft die Erfindung eine Brennkraftmaschine.

Eine Brennkraftmaschine, wie zum Beispiel eine Schiffsbrennkraftmaschine, verfügt über mehrere Zylinder. Die Zylinder sind dabei typischerweise unter Ausbildung mindestens einer Zylinderbank gruppiert. Im Bereich jeder Zylinderbank sind mehrere Zylinder in einer Reihe hintereinander oder nebeneinander positioniert. Eine Brennkraftmaschine in V-Bauweise verfügt über zwei Zylinderbänke mit jeweils mehreren Zylindern. Bei einer V20-Brennkraftmaschine umfasst dabei jede Zylinderbank insgesamt zehn Zylinder, die in einer Reihe positioniert sind.

In jedem Zylinder einer Brennkraftmaschine wird Kraftstoff verbrannt. Hierfür benötigte Ladeluft kann dem jeweiligen Zylinder über einlassseitige Gaswechselventile zugeführt werden. Über auslassseitige Gaswechselventile kann bei der Verbrennung des Kraftstoffs entstehendes Abgas vom jeweiligen Zylinder abgeführt werden.

Die einlassseitigen Gaswechselventile der Zylinder einer Zylinderbank einer Brennkraftmaschine sind über eine Ladeluftleitung mit Ladeluft versorgbar. Dabei erstreckt sich über den Bereich der jeweiligen Zylinderbank eine Ladeluftleitung, die mehrere Ladeluftleitungsabschnitte aufweist. Ausgehend von jedem Ladeluftleitungsabschnitt zweigt eine Abzweigung von der Ladeluftleitung ab, über die einem Zylinderkopf des jeweiligen Zylinders Ladeluft zugeführt werden kann. Der jeweilige Ladeluftleitungsabschnitt ist dabei mit dem jeweiligen Zylinderkopf des jeweiligen Zylinders verschraubt.

Aus der Praxis bekannte Ladeluftleitungen verfügen über ein stromaufwärtiges Ende sowie stromabwärtiges Ende. Im Bereich des stromaufwärtigen Endes kann der Ladeluftleitung Ladeluft zugeführt werden. Am stromabwärtigen Ende ist die Ladeluftleitung durch einen Enddeckel verschlossen. Dabei verfügen aus der Praxis bekannte Ladeluftleitungen zwischen dem stromaufwärtigen Ende und dem stromabwärtigen Ende über einen konstanten Strömungsquerschnitt.

Bedingt dadurch, dass die Ladeluftleitung am stromabwärtigen Ende über einen Enddeckel verschlossen ist, wirkt auf den Enddeckel eine Kraft, die einerseits vom Strömungsquerschnitt der Ladeluftleitung im Bereich des stromabwärtigen Endes am Enddeckel sowie vom Druck innerhalb der Ladeluftleitung abhängig ist. Diese auf den Enddeckel wirkende Kraft bewirkt eine Querkraft, die von der Verschraubung der Abzweigung des in Strömungsrichtung gesehen letzten bzw. stromabwärtigen Ladeluftleitungsabschnitts mit dem Zylinderkopf aufgenommen werden muss. Die Verschraubung des in Strömungsrichtung der Ladeluft gesehenen letzten Ladeluftleitungsabschnitts, nämlich der Abzweigung desselben, mit dem Zylinderkopf des entsprechenden Zylinders ist demnach auf die Aufnahme dieser Querkraft ausgelegt. Durch die Verwendung von Gleichteilen kommen auch an den stromaufwärts positionierten Abzweigungen stromaufwärtiger Ladeluftleitungsabschnitte entsprechende Verschraubungen zum Einsatz, die dann überdimensioniert sind, da an diesen stromaufwärtigen Ladeluftleitungsabschnitten bzw. Abzweigungen nach der Praxis keine derartige Querkraft durch die Verschraubungen aufgenommen werden müssen. Diese Überdimensionierung ist von Nachteil, da hierdurch ein erhöhtes Gewicht und erhöhte Kosten verursacht werden.

Es besteht Bedarf daran, im Bereich einer Ladeluftleitung auftretende Kräfte sicher aufzunehmen, jedoch die an den von den Ladeluftleitungsabschnitten der Ladeluftleitung abzweigenden Abzweigungen genutzten Verschraubungen kleiner und leichter zu dimensionieren.

Hiervon ausgehend liegt der Erfindung die Aufgabe zugrunde, eine neuartige Ladeluftleitung einer Brennkraftmaschine und eine entsprechende Brennkraftmaschine zu schaffen. Diese Aufgabe wird durch eine Ladeluftleitung nach Anspruch 1 gelöst. Erfindungsgemäß weist die Ladeluftleitung am stromaufwärtigen Ende einen größeren Strömungsquerschnitt als am stromabwärtigen Ende auf. Bedingt dadurch, dass bei der erfindungsgemäßen Ladeluftleitung am stromaufwärtigen Ende ein größerer Strömungsquerschnitt vorgesehen ist als am stromabwärtigen Ende, reduziert sich die am stromabwärtigen Ende im Bereich des Enddeckels auftretende Querkraft. Die Verschraubungen, über welche die Abzweigungen der Ladeluftleitungsabschnitte an den Zylinderköpfen der Zylinder verschraubt werden, können so leichter dimensioniert werden.

Nach einer vorteilhaften Weiterbildung weist die Ladeluftleitung eine Anzahl N Ladeluftleitungsabschnitte auf, um eine Anzahl N Zylinder der jeweiligen Zylinderbank mit Ladeluft zu versorgen, wobei die Ladeluftleitung im Bereich des stromaufwärtigen Endes und ausgehend vom stromaufwärtigen Ende aus gesehen im Bereich des 1-ten bis J-ten Ladeluftleitungsabschnitts einen ersten Strömungsquerschnitt aufweist, wobei J<N ist, und wobei die Ladeluftleitung ausgehend vom stromaufwärtigen Ende aus gesehen zumindest im Bereich des N-ten Ladeluftleitungsabschnitts und des stromabwärtigen Endes einen zweiten Strömungsquerschnitt aufweist, der kleiner als der erste Strömungsquerschnitt ist. Vorzugsweise ist J=N-2 oder J=N-1. Diese Ausführung der Ladeluftleitung ist besonders bevorzugt, um Verschraubungen, die der Verschraubung der von den Ladeluftleitungsabschnitten abzweigenden Abzweigungen an den Zylinderköpfen der Zylinder dienen, kleiner und leichter auszuführen. Eine Querkraft, die bislang nach der Praxis ausschließlich im Bereich des in Strömungsrichtung der Ladeluft gesehen N-ten und damit letzten Ladeluftleitungsabschnitts der Ladeluftleitung abzufangen waren, werden erfindungsgemäß auf mehrere Ladeluftleitungsabschnitte verteilt. Wie bereits ausgeführt, ist es hierdurch möglich, Verschraubungen, die der Anbindung der von den Ladeluftleitungsabschnitten abzweigenden Abzweigungen an dem Zylinderkopf des jeweiligen Zylinders dienen, kleiner und leichter ausgeführt werden. Nach einer vorteilhaften Weiterbildung verringert sich der Strömungsquerschnitt im Bereich des J-ten Ladeluftleitungsabschnitts vom ersten Strömungsquerschnitt auf den zweiten Strömungsquerschnitt. Der Strömungsquerschnitt verringert sich vom ersten Strömungsquerschnitt auf den zweiten Strömungsquerschnitt kontinuierlich, insbesondere trichterartig oder kegelartig.

Nach einer vorteilhaften Weiterbildung gilt für das Verhältnis V=A2/A1 zwischen dem zweiten Strömungsquerschnitt A2 und dem ersten Strömungsquerschnitt A1 0,3≤V≤0,7, bevorzugt gilt: 0,4≤V≤0,5, besonders bevorzugt gilt: V=0,5. Dann, wenn sich der Strömungsquerschnitt im Bereich eines Ladeluftleitungsabschnitts ausgehend vom ersten Strömungsquerschnitt auf den zweiten Strömungsquerschnitt reduziert, ist es besonders vorteilhaft, wenn das Verhältnis V 0,5 oder in etwa 0,5 beträgt, sodass dann die Querkraft auf zwei Ladeluftleitungsabschnitte gleichmäßig oder in etwa gleichmäßig aufgeteilt wird.

Die erfindungsgemäße Brennkraftmaschine ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einer Brennkraftmaschine im Bereich einer Zylinderbank und einer Ladeluftleitung, und
- Fig. 2: die Ladeluftleitung in Alleindarstellung.

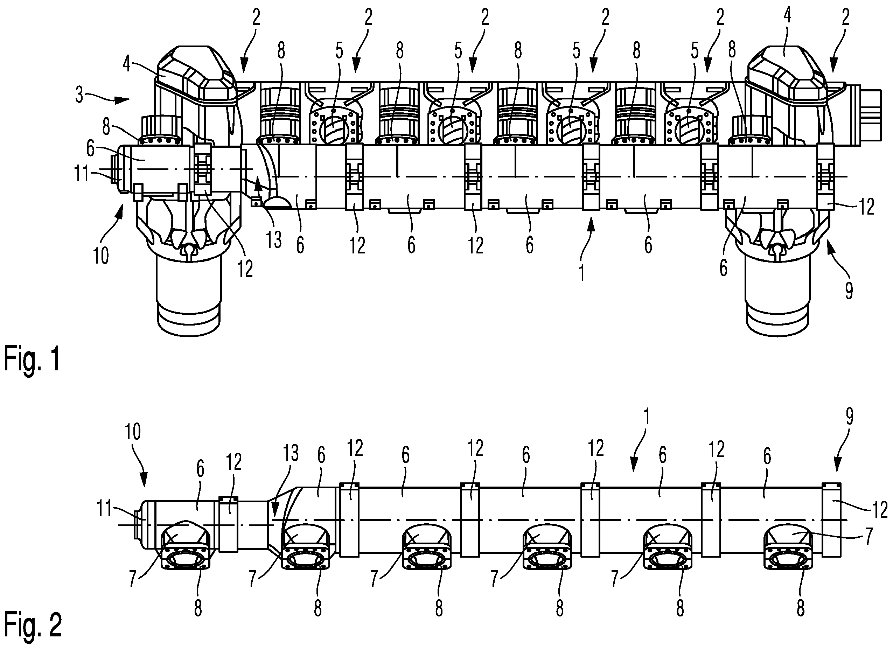

Fig. 1 zeigt einen Ausschnitt aus einer erfindungsgemäßen Brennkraftmaschine im Bereich einer erfindungsgemäßen Ladeluftleitung 1, die sich entlang mehrerer in einer Reihe angeordneter Zylinder 2 einer Zylinderbank 3 erstreckt.

Im in Fig. 1 gezeigten Ausführungsbeispiel umfasst die Zylinderbank 3 sechs in einer Reihe angeordnete Zylinder 2. Über die Ladeluftleitung 1 können sämtliche Zylinder 2 der Zylinderbank 3 mit Ladeluft versorgt werden. Fig. 2 zeigt die Ladeluftleitung 1 in Alleindarstellung in einer gegenüber Fig. 1 gedrehten Position.

In Fig. 1 sind von den beiden äußersten Zylindern 2 Zylinderköpfe 4 gezeigt. Von den dazwischen angeordneten Zylindern 2 sind in Fig. 1 die Zylinderköpfe nicht gezeigt, wobei dann in Fig. 1 für diese Zylinder ein Blick auf Abgasleitungen 5 freigegeben ist, über welche von den Zylindern 2 Abgas, welches bei der Verbrennung eines Kraftstoffs in den Zylindern 2 anfällt, abgeführt werden kann.

Wie bereits ausgeführt, dient die Ladeluftleitung 1 der Versorgung der Zylinder 2 mit Ladeluft, wobei die Ladeluftleitung 1 mehrere Ladeluftleitungsabschnitte 6 aufweist. Von jedem Ladeluftleitungsabschnitt 6 führt eine Abzweigung 7 zum jeweiligen Zylinder 2, um den jeweiligen Zylinder 2 mit Ladeluftleitung zu versorgen. Die jeweilige Abzweigung 7 zweigt senkrecht oder in etwa senkrecht vom jeweiligen Ladeluftleitungsabschnitt 6 ab.

Die jeweilige Abzweigung 7 ist über eine Flanschverbindung mit dem Zylinderkopf 4 des jeweiligen Zylinders 2 verschraubbar bzw. verschraubt, wobei insbesondere Fig. 2 an den Abzweigungen 7 ausgebildete Flansche 8 zeigt, über welche dann die Ladeluftleitung 1 bzw. die Abzweigung 7 des jeweiligen Ladeluftleitungsabschnitts 6 mit dem jeweiligen Zylinderkopf 4 des jeweiligen Zylinders 2 verschraubt werden kann.

Die aus den mehreren Ladeluftleitungsabschnitten 6 zusammengesetzte Ladeluftleitung 1 verfügt über ein stromaufwärtiges Ende 9, über welches die Ladeluftleitung 1 mit Ladeluft versorgt werden kann.

Ausgehend vom stromaufwärtigen Ende 9 ist demnach der Ladeluftleitung 1 Ladeluft zuführbar. Ausgehend von diesem stromaufwärtigen Ende 9 der Ladeluftleitung 1 strömt die Ladeluft in Richtung auf ein stromabwärtiges Ende 10 der Ladeluftleitung 1, wobei dieses stromabwärtige Ende 10 der Ladeluftleitung 1 durch einen Enddeckel 11 verschlossen ist.

Die einzelnen Ladeluftleitungsabschnitte 6 sind von entsprechenden Segmenten bereitgestellt, die über Verbindungseinrichtungen 12 miteinander verbunden sind. Hierdurch ist es möglich, die Länge bzw. die Anzahl der Ladeluftleitungsabschnitte 6 auf die Anzahl der Zylinder 2 der Brennkraftmaschine anzupassen.

Im gezeigten Ausführungsbeispiel verfügt die gezeigte Zylinderbank 3 über eine Anzahl N=6 Zylinder 2. Demnach verfügt dann die Ladeluftleitung 1 über eine Anzahl N=6 Ladeluftleitungsabschnitte 6. Ausgehend von jedem Ladeluftleitungsabschnitt 6 zweigt eine Abzweigung 7 in Richtung auf den Zylinderkopf 4 des jeweiligen Zylinders 2 ab, um so jeden Zylinder 2 mit Ladeluft zu versorgen.

Die Anzahl N=6 der Zylinder 2 und der Ladeluftleitungsabschnitte 6 ist rein exemplarischer Natur. Die Anzahl N kann auch größer als sechs oder kleiner als sechs sein. So kann N zum Beispiel zehn oder sieben oder fünf betragen.

Die Ladeluftleitung 1 weist am stromaufwärtigen Ende 9 derselben einen größeren Strömungsquerschnitt auf als am stromabwärtigen Ende 10. Hierdurch kann eine Querkraft, die im Bereich des in Strömungsrichtung der Ladeluft gesehen letzten Ladeluftleitungssegments 6 durch das Verschließen der Ladeluftleitung 1 über den Enddeckel 11 entsteht, reduziert werden. Hierdurch können dann Verschraubungen, über welche die Flansche 8 der Abzweigungen 7 der Ladeluftleitungssegmente 6 mit den Zylinderköpfen 4 der Zylinder 2 verschraubt sind, kleiner und leichter dimensioniert werden.

Die Ladeluftleitung 1 weist im Bereich des stromaufwärtigen Endes 9 und ausgehend vom stromaufwärtigen Ende 9 aus gesehen im Bereich des 1-ten bis J-ten Ladeluftleitungsabschnitts 6 einen ersten Strömungsquerschnitt auf. J ist kleiner als N. Die Ladeluftleitung 1 weist ausgehend vom stromaufwärtigen Ende 9 aus gesehen zumindest im Bereich des N-ten Ladeluftleitungsabschnitts 6 und des stromaufwärtigen Endes 10 und damit im Bereich des Enddeckels 11 einen zweiten Strömungsquerschnitt auf, der kleiner als der erste Strömungsquerschnitt ist.

Im gezeigten Ausführungsbeispiel ist J=N-1. Daraus folgt, dass im gezeigten Ausführungsbeispiel die Ladeluftleitung 1 im Bereich des stromaufwärtigen Endes 9 und ausgehend vom stromaufwärtigen Ende 9 aus gesehen im Bereich des 1-ten bis N-1-ten Ladeluftleitungsabschnitts den ersten Strömungsquerschnitt aufweist, und dass die Ladeluftleitung im Bereich des N-ten Ladeluftleitungsabschnitts und des stromabwärtigen Endes 10 sowie Enddeckels 11 den zweiten Strömungsquerschnitt aufweist, der kleiner als der erste Strömungsquerschnitt ist. Dabei kann Fig. 1 und 2 entnommen werden, dass sich im Bereich des J-ten Ladeluftleitungsabschnitts 6, also im gezeigten Ausführungsbeispiel im Bereich des N-1-ten Ladeluftleitungsabschnitts 6, der Strömungsquerschnitt vom ersten Strömungsquerschnitt auf den zweiten Strömungsquerschnitt verringert, und zwar unmittelbar angrenzend an die Abzweigung 7, nämlich unmittelbar stromabwärts der Abzweigung 7 des J-ten Ladeluftleitungsabschnitts 6, Der J-te Ladeluftleitungsabschnitt 6, und zwar im gezeigten Ausführungsbeispiel der N-1-te Ladeluftleitungsabschnitt 6 verfügt demnach über einen Teilabschnitt 13, in welchem sich der Strömungsquerschnitt vom ersten Strömungsquerschnitt auf den zweiten Strömungsquerschnitt verringert, und zwar vorzugsweise kontinuierlich, insbesondere trichterartig oder kegelartig.

Im Ausführungsbeispiel der Fig. 1 und 2 fällt demnach die Querkraft nicht ausschließlich im Bereich des in Strömungsrichtung gesehen letzten Ladeluftleitungsabschnitts 6 an, sondern vielmehr im Bereich des letzten sowie vorletzten Ladeluftleitungsabschnitts 6.

Durch eine entsprechende Dimensionierung eines Verhältnisses V=A2/A1 zwischen dem zweiten Strömungsquerschnitt A2 und dem ersten Strömungsquerschnitt A1 kann diejenigen Querkraft, die bei aus der Praxis bekannten Ladeluftleitungen ausschließlich im Bereich des letzten Ladeluftleitungsabschnitts 6 anfällt, definiert auf mehrere, im gezeigten Ausführungsbeispiel auf zwei, Ladeluftleitungsabschnitte 6 aufgeteilt werden, und zwar auf den letzten sowie vorletzten Ladeluftleitungsabschnitt 6. Dann, wenn V=0,5 ist, fallen im Bereich dieser Ladeluftleitungsabschnitte 6 in etwa gleich große Querkräfte an. Es ist auch möglich, für V ein anderes Verhältnis zu wählen. So gilt: 0,3≤V≤0,7. Bevorzugt gilt 0,4≤V≤0,5.

Obwohl im gezeigten Ausführungsbeispiel die Veränderung des Strömungsquerschnitts ausgehend vom ersten Strömungsquerschnitt auf den zweiten Strömungsquerschnitt im Bereich des vorletzten (N-1-ten) Ladeluftleitungsabschnitts 6 erfolgt, ist es auch möglich, diese Veränderung des Strömungsquerschnitts an einem anderen Ladeluftleitungssegment 6 vorzunehmen, so zum Beispiel am drittletzten bzw. N-2-ten Ladeluftleitungssegments 6.

Im gezeigten bevorzugten Ausführungsbeispiel erfolgt die Verringerung des Durchmessers vom ersten, stromaufwärtigen Strömungsquerschnitt auf den zweiten, stromabwärtigen Strömungsquerschnitt im Bereich eines einzigen Ladeluftleitungssegments 6. Es ist auch möglich, diese Veränderung des Strömungsquerschnitts abgestuft in zwei oder drei Ladeluftleitungssegmenten 6 vorzunehmen. So kann zum Beispiel im Bereich des drittletzten Ladeluftleitungsabschnitts 6 eine erste Verringerung des Strömungsquerschnitts und im Bereich des vorletzten Ladeluftleitungsabschnitts 6 eine zweite Verringerung des Strömungsquerschnitts vorgenommen werden. In diesem Fall erfolgt dann im Bereich des drittletzten Ladeluftleitungsabschnitts 6 eine Verringerung des Strömungsquerschnitts ausgehend vom ersten Strömungsquerschnitt auf einen dritten Strömungsquerschnitt und im Bereich des vorletzten Ladeluftleitungsabschnitts 6 eine Verringerung des Strömungsquerschnitts ausgehend vom dritten Strömungsquerschnitt auf den zweiten Strömungsquerschnitt, sodass dann die Querkraft auf drei Ladeluftleitungsabschnitte 6 verteilt wird.

Die Variante der Fig. 1 und 2, in welcher die Verringerung des Strömungsquerschnitts im Bereich eines einzigen Ladeluftleitungsabschnitts 6 ausgehend vom ersten Strömungsquerschnitt auf den zweiten Strömungsquerschnitt erfolgt, ist jedoch bevorzugt, um möglichst viele Gleichteile einzusetzen.

Mit der Erfindung ist es möglich, eine Querkraft, die bei aus der Praxis bekannten Ladeluftleitungen 1 ausschließlich auf den letzten Ladeluftleitungsabschnitt 6 einwirkt, auf mehrere Ladeluftleitungsabschnitte 6 zu verteilen, insbesondere auf zwei Ladeluftleitungsabschnitte 6, nämlich auf den letzten sowie den vorletzten Ladeluftleitungsabschnitt 6, ausgehend vom stromaufwärtigen Ende 9 der Ladeluftleitung 1 aus gesehen. Dann, wenn der zweite Strömungsquerschnitt der Hälfte des ersten Strömungsquerschnitts entspricht, wird dann die Querkraft gleichmäßig auf diese beiden Ladeluftleitungsabschnitte 6 aufgeteilt. Hierdurch ist es letztendlich möglich, eine Verschraubung zwischen dem Flansch 8 der jeweiligen Abzweigung 7 des jeweiligen Ladeluftleitungsabschnitts 6 und dem jeweiligen Zylinderkopf 4 des jeweiligen Zylinders 2 kleiner und leichter zu dimensionieren, da geringere Querkräfte abgefangen werden müssen und so dann die entsprechenden Verschraubungen kleiner und leichter dimensioniert werden können.

### Bezugszeichenliste

- 1: Ladeluftleitung
- 2: Zylinder
- 3: Zylinderbank
- 4: Zylinderkopf
- 5: Abgasleitung
- 6: Ladeluftleitungsabschnitt
- 7: Abzweigung
- 8: Flansch
- 9: stromaufwärtiges Ende
- 10: stromabwärtiges Ende
- 11: Enddeckel
- 12: Verbindungseinrichtung
- 13: Zwischenabschnitt

## Patentansprüche

1. Ladeluftleitung (1) einer Brennkraftmaschine zur Versorgung mehrerer in einer Reihe angeordneter Zylinder (2) einer Zylinderbank (3) der Brennkraftmaschine mit Ladeluft,
mit mehreren Ladeluftleitungsabschnitten (6) der Ladeluftleitung (1), wobei ausgehend von jedem Ladeluftleitungsabschnitt (6) eine Abzweigung (7) zu einem Zylinder (2) führt, die mit einem Zylinderkopf (4) des jeweiligen Zylinders (2) verschraubbar ist,
mit einem stromaufwärtigen Ende (9) der Ladeluftleitung (1), über welches der Ladeluftleitung Ladeluft zuführbar ist,
mit einem stromabwärtigen Ende (10) der Ladeluftleitung (1), welches durch einen Enddeckel (11) verschlossen ist,
**dadurch gekennzeichnet, dass**
die Ladeluftleitung (1) am stromaufwärtigen Ende (9) einen größeren Strömungsquerschnitt aufweist als am stromabwärtigen Ende (10).

2. Ladeluftleitung nach Anspruch 1, **dadurch gekennzeichnet, dass**
die Ladeluftleitung (1) eine Anzahl N Ladeluftleitungsabschnitte (6) aufweist, um eine Anzahl N Zylinder (2) der jeweiligen Zylinderbank (3) mit Ladeluft zu versorgen,
die Ladeluftleitung (1) im Bereich des stromaufwärtigen Endes (9) und ausgehend vom stromaufwärtigen Ende (9) aus gesehen im Bereich des 1-ten bis J-ten Ladeluftleitungsabschnitts (6) einen ersten Strömungsquerschnitt aufweist, wobei J<N ist,
die Ladeluftleitung (1) ausgehend vom stromaufwärtigen Ende (9) aus gesehen zumindest im Bereich des N-ten Ladeluftleitungsabschnitts (6) und des stromabwärtigen Endes (10) einen zweiten Strömungsquerschnitt aufweist, der kleiner als der erste Strömungsquerschnitt ist.

3. Ladeluftleitung nach Anspruch 2, **dadurch gekennzeichnet, dass** sich der Strömungsquerschnitt im Bereich des J-ten Ladeluftleitungsabschnitts (6) vom ersten Strömungsquerschnitt auf den zweiten Strömungsquerschnitt verringert.

4. Ladeluftleitung nach Anspruch 2 oder 3, **dadurch gekennzeichnet, dass** J=N-2.

5. Ladeluftleitung nach Anspruch 1, **dadurch gekennzeichnet, dass**
die Ladeluftleitung (1) eine Anzahl N Ladeluftleitungsabschnitte (6) aufweist, um eine Anzahl N Zylinder (2) der jeweiligen Zylinderbank (3) mit Ladeluft zu versorgen,
die Ladeluftleitung (1) im Bereich des stromaufwärtigen Endes (9) und ausgehend vom stromaufwärtigen Ende (9) aus gesehen im Bereich des 1-ten bis N-1-ten Ladeluftleitungsabschnitts (6) einen ersten Strömungsquerschnitt aufweist,
die Ladeluftleitung (1) ausgehend vom stromaufwärtigen Ende (9) aus gesehen im Bereich des N-ten Ladeluftleitungsabschnitts (6) und des stromabwärtigen Endes (10) einen zweiten Strömungsquerschnitt aufweist, der kleiner als der erste Strömungsquerschnitt ist.

6. Ladeluftleitung nach Anspruch 5, **dadurch gekennzeichnet, dass** sich der Strömungsquerschnitt im Bereich des N-1-ten Ladeluftleitungsabschnitts (6) vom ersten Strömungsquerschnitt auf den zweiten Strömungsquerschnitt verringert.

7. Ladeluftleitung nach einem der Ansprüche 1 bis 6, **dadurch gekennzeichnet, dass** sich der Strömungsquerschnitt vom ersten Strömungsquerschnitt auf den zweiten Strömungsquerschnitt kontinuierlich verringert.

8. Ladeluftleitung nach einem der Ansprüche 1 bis 7, **dadurch gekennzeichnet, dass** sich der Strömungsquerschnitt vom ersten Strömungsquerschnitt auf den zweiten Strömungsquerschnitt trichterartig oder kegelartig verringert.

9. Ladeluftleitung nach einem der Ansprüche 1 bis 8, **dadurch gekennzeichnet, dass** für das Verhältnis V=A2/A1 zwischen dem zweiten Strömungsquerschnitt A2 und dem ersten Strömungsquerschnitt A1 gilt: 0,3≤V≤0,7, bevorzugt gilt: 0,4≤V≤0,5, besonders bevorzugt gilt: V=0,5.

10. Brennkraftmaschine,
mit mindestens einer Zylinderbank (3), wobei jede Zylinderbank (3) mehrere in einer Reihe angeordnete Zylinder (2) aufweist,
mit mindestens einer Ladeluftleitung (1) zur Versorgung der Zylinder (2) der jeweiligen Zylinderbank (3) mit Ladeluft,
**dadurch gekennzeichnet, dass**
die jeweilige Ladeluftleitung (1) nach einem der Ansprüche 1 bis 9 ausgebildet ist.
